# EUROPÄISCHE PATENTSCHRIFT

(11) **EP 1 820 977 B1**
(45) Veröffentlichungstag und Bekanntmachung des Hinweises auf die Patenterteilung: **12.10.2011**
(21) Anmeldenummer: 07002458.3
(22) Anmeldetag: 05.02.2007
(51) Int. Cl.: F16B 12/20

(54) **Verbindungsbeschlag für Hohlplatten**
Connector fitting for hollow plates
Pièce d'assemblage pour plaques creuses

(30) Priorität: 18.02.2006 DE 202006002649 U
(43) Veröffentlichungstag der Anmeldung: 22.08.2007
(73) Patentinhaber: Häfele GmbH & Co. KG, 72202 Nagold (DE)
(72) Erfinder: Walz, Rüdiger, 72401 Haigerloch (DE)
(74) Vertreter: Kohler Schmid Möbus

(56) Entgegenhaltungen:
- EP-A1- 0 507 289
- DE-U1- 29 804 267
- GB-A- 2 080 907

## Beschreibung

Die Erfindung bezieht sich auf einen Verbindungsbeschlag für Hohlplatten, insbesondere Wabenplatten, Sandwichplatten oder dergleichen mit einem in einem Gehäuse drehbar gelagerten Spannteil, welches den Kopf eines zugehörigen Anzugsbolzens aufnimmt, wobei das Gehäuse zweiteilig ausgebildet ist.

Ein derartiger Verbindungsbeschlag ist aus der EP 0 507 289 A1 bekannt geworden. Der Verbindungsbeschlag weist ein Gehäuse auf, welches über einen Flansch mit einem Zapfen verbunden ist. Der gesamte Verbindungsbeschlag ist zweiteilig ausgebildet, wobei an einem ersten Teil Verbindungszapfen und an einem zweiten Teil Öffnungen zum Eingreifen der verbindungszapfen ausgebildet sind. Der Verbindungsbeschlag wird derart in Sacklochbohrungen in einem ersten Möbelteil eingesetzt, dass das Gehäuse mit einer Stirnseite des ersten Möbelteils bündig abschließt. An der der Stirnseite zugeordneten Seite weist das Gehäuse einen Schlitz auf, durch welchen ein Anzugsbolzen hindurchtreten kann. Der Anzugsbolzen wird zum Verbinden des ersten Möbelteils mit einem zweiten Möbelteil an der Oberfläche des zweiten Möbelteils eingesetzt. In das Gehäuse wird ein Spannteil eingesetzt, welches mittels Lagerzapfen in einer quer zur Ausrichtung des Anzugsbolzens ausgerichteten Achse verschwenkbar ist. Zur Betätigung des Spannteils ist an diesem ein verlängerter Ansatz ausgebildet. Beim Verschwenken des Spannteils von einer Freigabe- in eine Schließstellung wird der Kopf des Anzugsbolzens hintergriffen und über eine exzentrisch angeordnete Spannfläche angezogen.

Die DE 298 04 267 U1 betrifft einen Verbinder zwischen zwei Bauteilen, insbesondere Platten. Um zwei Platten miteinander zu verbinden, wird zunächst ein Anzugsbolzen in eine der geöffneten und durch ein Scharnier schwenkbar verbundenen Gehäuseteile eines Gehäuses eingelegt. Anschließend werden dann die beiden Gehäuseteile aufeinander geschwenkt und mittels einer Rastvorrichtung miteinander verbunden. Der Verbinder bzw. das Gehäuse werden in Bohrungen an der Oberfläche einer ersten Platte und an der Stirnseite einer zweiten Platte eingesetzt. Der Anzugsbolzen weist an seinem Kopf eine Ausnehmung auf, in welche ein Spannteil eingesetzt wird. Das Gehäuse weist im entsprechenden Abschnitt eine Querbohrung zur Längsachse auf, in welcher das Spannteil drehbar gelagert ist und von einer Oberfläche der zweiten Platte durch eine Ausnehmung zugänglich ist. Bei einem Verdrehen des Spannteils wird der im Gehäuse längsverschiebbare Anzugsbolzen derart verschoben, dass beide Platten bis zum Anschlag aneinander gezogen und gegeneinander festgelegt werden.

Aus der GB 2 080 907 A ist ein weiterer Verbindungsbeschlag bekannt geworden. Ein Bolzen wird in eine erste Platte eingesetzt und weist an seinem freien Ende eine Manschette und einen Kopf auf. Der Verbindungsbeschlag bzw. dessen Gehäuse ist aus zwei halbzylindrischen Gehäuseteilen zusammengesetzt, welche über ein Scharnier miteinander verbunden sind. Der Bolzen wird von beiden Gehäuseteilen umschlossen, bevor der geschlossene Verbindungsbeschlag in eine entsprechende Ausnehmung an einer zweiten Platte eingesetzt wird. Über eine Schraube wird der Bolzen in der gewählten Stellung fixiert. Dabei ist das Außengewinde der Schraube derart auf das Gewinde einer Bohrung abgestimmt, dass in einer Endstellung der Schraube ein Keil unterhalb des Kopfs des Bolzens anliegt.

Hohlplatten bestehen aus zwei relativ dünnen, jedoch festen Deckplatten, wobei der Hohlraum zwischen diesen mit Wellpappe oder ähnlichem Material ausgefüllt ist. Während Beschläge bei massiven Platten in Bohrungen derselben eingelassen oder in einfacher Weise angeschraubt werden können, finden die Beschläge oder Schrauben bei Hohlplatten keinen Halt innerhalb der Hohlräume, so dass man sich bei der Befestigung auf die Deckplatten beschränken muss.

Bei einem Verbindungsbeschlag mit einem in einem Gehäuse drehbar gelagerten Spannteil, welches den Kopf eines zugehörigen Anzugsbolzens aufnimmt, entstehen Schwierigkeiten beim Einsetzen des Spannteils in das Gehäuse. Die zur Oberseite gerichtete Öffnung des Gehäuses soll möglichst unaufällig sein und nur zum Einsetzen eines Werkzeuges zum Drehen des Spannteiles dienen. Bei einem Einsetzen von unten und Verrasten besteht die Gefahr, das bei zu starkem Druck auf das Werkzeug das Spannteil herausfällt, da der bei Massivplatten vorhandene Boden der Bohrung fehlt.

Der Erfindung liegt die Aufgabe zugrunde, eine Möglichkeit zu schaffen, ein Spannteil in erleichterter Weise in einen Verbindungsbeschlag einzusetzen.

Gelöst wird diese Aufgabe durch einen Verbindungsbeschlag der eingangs beschriebenen Art, der erfindungsgemäß dadurch gekennzeichnet ist, dass beide Gehäuseteile durch ein Scharnier mit einer etwa parallel zur Spannteilachse verlaufenden Achse verbunden und in der geschlossenen Lage miteinander verrastbar sind. Nunmehr kann das Spannteil, nachdem die beiden Gehäuseteile auseinander geschwenkt sind, seitlich eingesetzt werden. Anschliessend werden dann die Gehäuseteile zusammen geschwenkt und in beliebiger Weise verbunden. Dadurch ist es möglich, den Boden des Gehäuses aus relativ festem Material zu gestalten.

Vorzugsweise ist das Scharnier als Filmscharnier ausgebildet. Zur Verbindung der Gehäuseteile im geschlossenen Zustand des Gehäuses ist zweckmässiger Weise eine Rastvorrichtung angeordnet. Diese kann aus einem unterhalb des Gehäuses an einem der beiden Teile desselben angeordneten elastischen Rasthaken und einer am anderen Teil vorgesehenen Rastvertiefung bestehen.

Zur Befestigung des Gehäuses in der Hohlplatte ist eines der beiden Gehäuseteile mit einer oberhalb der Hohlplatte anzuordnenden Befestigungsplatte verbunden ist. Diese steht insbesondere am Gehäusescharnier über das Gehäuse vor, wobei am vorstehenden Teil ein nach unten gerichteter Zapfen als Verstärkung und Verdrehsicherung vorgesehen ist.

Das Gehäuse weist zweckmässig teilweise umlaufende Rippen und die Deckschicht der Hohlplatte untergreifende Flügel auf. Vorzugsweise ist das Gehäuse an seiner dem Scharnier abgewandten Seite im unteren Teil mit einen Stützsteg versehen. Dieser dient zur Anlage an einer Unterkante der Hohlplatte. Dadurch ergibt sich eine bessere Abstützung des Beschlages in der Hohlplatte.

Die Zeichnung zeigt Ausführungsbeispiele der Erfindung. Es stellen dar:
- Figur 1: eine perspektivische Ansicht eines Verbindungsbe- schlages mit einem Anzugsbolzen.
- Figur 2: eine Darstellung nach Fig. 1 im ausgeschwenktem Zustand der Gehäuseteile.
- Figur 3: zwei verbundene Wabenplatten mit einem Verbin- dungsbeschlag nach Fig.1,

Der Verbindungsbeschlag weist ein Gehäuse 1 mit einem darin drehbar gelagerten Spannteil 2 für den Kopf 3 eines Anzugsbolzens 4 auf.

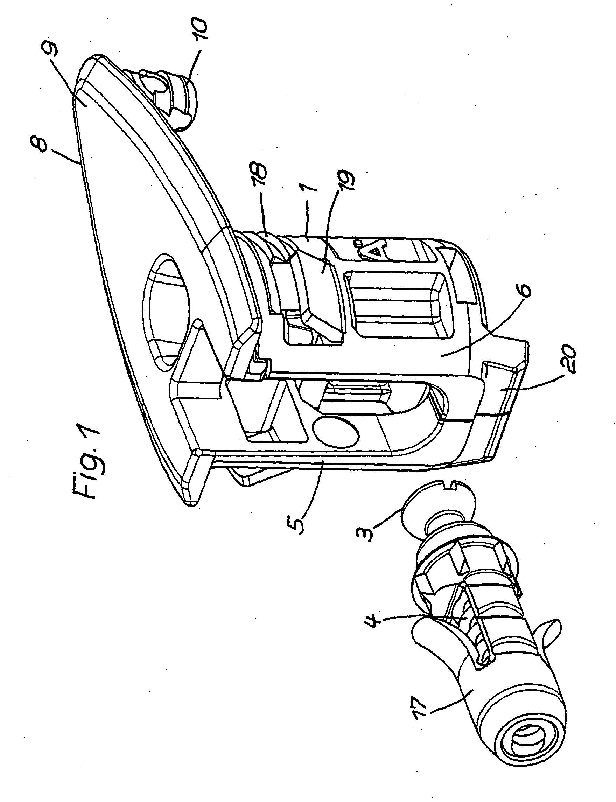

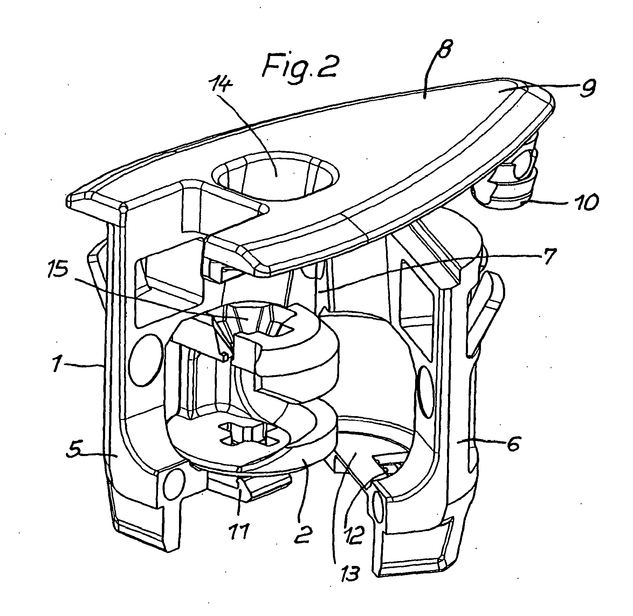

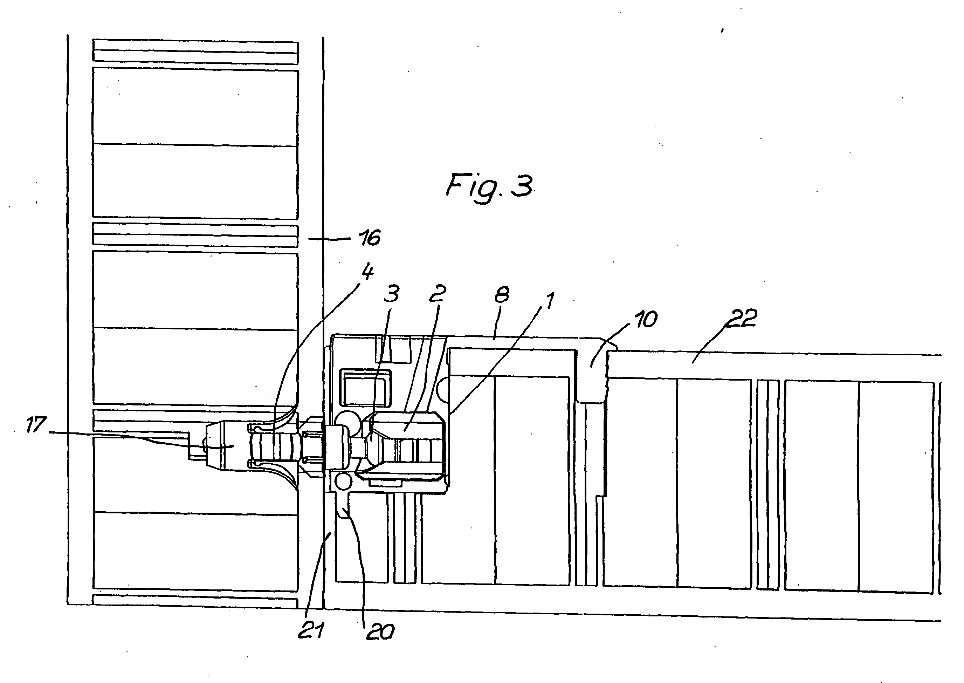

Das Gehäuse 1 setzt sich aus zwei Gehäuseteilen 5 und 6 zusammen, welche durch ein etwa parallel zur Achse des Spannteils 2 verlaufendes Filmscharnier 7 schwenkbar miteinander verbunden sind. Das Gehäuseteil 5 besteht aus einem Stück mit einer Befestigungsplatte 8, welche, wie Fig. 3 zeigt oberhalb einer Hohlplatte 9 zu liegen kommt. Die Befestigungsplatte 8 steht über das Gehäuse 1 hinaus und am vorstehenden Teil 9 ist ein nach unten gerichteter Zapfen 10 vorgesehen, welcher ebenfalls in die Hohlplatte 22 eingreift und insbesondere zur Verdrehsicherung des Beschlages dient. Das Spannteil 2 wird in das nach Fig. 2 geöffnete Gehäuse 1 seitlich eingesetzt, worauf dann das Gehäuseteil 6 vom Gehäuseteil 5 in die geschlossene Stellung nach Fig. 1 geschwenkt wird. Zur Befestigung der Teile 5 und 6 in dieser Lage ist am Gehäuseteil 5 ein elastischer Rasthaken 11 vorgesehen und am Gehäuseteil 6 eine Rastvertiefung 12.

Wie vor allem aus Fig. 2 ersichtlich ist, besitzt das Gehäuse 1 ein sehr festes Bodenteil 13, so dass bei einem Einführen eines nicht dargestellten Werkzeuges durch die Öffnung 14 der Befestigungsplatte 8 in die Werkzeugaufnahme 15 des Spannteiles 2 auch bei festem Druck auf das Werkzeug kein Durchbrechen des Spannteiles 2 nach unten zu befürchten ist.

Fig. 3 zeigt die Verbindung zwischen einer Hohlplatte 22 und einer senkrecht hierzu stehenden weiteren Hohlplatte 16. Dabei ist der Bolzen 4 mittels eines Dübels 17 in der Hohlplatte 16 festgelegt und greift mit seinem Kopf 3 in das Spannteil 2 ein. Dieses ist im Gehäuse 1 drehbar gelagert und zusammen mit der Befestigungsplatte 8 in der Hohlplatte 22 angeordnet. Beim Drehen des Spannteiles 2 werden der Bolzen 4 über seinen Kopf 3 und damit die Hohlplatte 16 an die Hohlplatte 22 herangezogen und die Platten 22,16 damit fest miteinander verbunden.

Um die Abstützung des Beschlages in der Hohlplatte 22 zu verbessern, ist das Gehäuse 1 mit über einen Teil deselben umlaufenden Rippen 18 und mehreren schräg nach oben aussen stehenden elastischen Flügeln 19 versehen. Das Gehäuse ist weiterhin an seiner dem Scharnier 7 abgewandten Seite im unteren Teil mit einen Stützsteg 20 versehen. Dieser dient zur Anlage an einer Unterkante 21 der Hohlplatte 22.

## Patentansprüche

1. Verbindungsbeschlag für Hohlplatten, insbesondere Wabenplatten, Sandwichplatten odgl. mit einem in einem Gehäuse (1) drehbar gelagerten Spannteil (2), welches den Kopf (3) eines zugehörigen Anzugsbolzens (4) aufnimmt, wobei das Gehäuse (1) zweiteilig ausgebildet ist, **dadurch gekennzeichnet, dass** beide Gehäuseteile (5,6) durch ein Scharnier (7) mit einer etwa parallel zur Spannteilachse verlaufenden Achse verbunden und in der geschlossenen Lage miteinander verrastbar sind.

2. Verbindungsbeschlag nach Anspruch 1, **dadurch gekennzeichnet, dass** eines der beiden Gehäuseteile (5,6) mit einer oberhalb einer Hohlplatte (22) anzuordnenden Befestigungsplatte (8) verbunden ist.

3. Verbindungsbeschlag nach Anspruch 2, **dadurch gekennzeichnet, dass** an der der Befestigungsplatte (8) gegenüberliegenden Seite des Gehäuses (1) ein festes Bodenteil (13) ausgebildet ist.

4. Verbindungsbeschlag nach Anspruch 2 oder 3, **dadurch gekennzeichnet, dass** das Spannteil (2) eine Werkzeugaufnahme (15) aufweist und in der Befestigungsplatte (8) eine Öffnung (14) zum Einführen eines Werkzeuges ausgebildet ist.

5. Verbindungsbeschlag nach einem der vorhergehenden Ansprüche, **dadurch gekennzeichnet, dass** das Scharnier als Filmscharnier (7) ausgebildet ist.

6. Verbindungsbeschlag nach einem der vorhergehenden Ansprüche, **dadurch gekennzeichnet, dass** zur Verbindung der beiden Gehäuseteile (5, 6) im geschlossenen Zustand des Gehäuses (1) eine Rastvorrichtung (11, 12) angeordnet ist.

7. Verbindungsbeschlag nach Anspruch 6, **dadurch gekennzeichnet, dass** die Rastvorrichtung aus einem unterhalb des Gehäuses (1) an einem der beiden Teile desselben angeordneten elastischen Rasthaken (11) und einer am anderen Teil vorgesehenen Rastvertiefung (12) besteht.

8. Verbindungsbeschlag nach einem der Ansprüche 2 bis 7, **dadurch gekennzeichnet, dass** die Befestigungsplatte (8) insbesondere am Gehäusescharnier (7) über das Gehäuse (1) vorsteht, wobei am vorstehenden Teil (9) ein nach unten gerichteter Zapfen (10) vorgesehen ist.

9. Verbindungsbeschlag nach einem der vorhergehenden Ansprüche, **dadurch gekennzeichnet, dass** das Gehäuse (1) teilweise umlaufende Rippen (18) und die Deckschicht der Hohlplatte (9) untergreifende Flügel (19) aufweist.

10. Verbindungsbeschlag nach einem der vorhergehenden Ansprüche, **dadurch gekennzeichnet, dass** Gehäuse (1) an seiner dem Scharnier (7) abgewandten Seite im unteren Teil einen Stützsteg (20) aufweist.

## Claims

1. A connection fitting for hollow panels, especially honeycomb panels, sandwich panels or the like, having a tensioning element (2) which is rotatably supported in a housing (1) and which receives the head (3) of an associated tightening bolt (4), the housing (1) being of a two-part construction, **characterised in that** the two housing parts (5, 6) are connected by a hinge (7) with an axis extending approximately parallel to the axis of the tensioning element, and can be locked to each other in the closed position.

2. A connection fitting according to claim 1, **characterised in that** one of the two housing parts (5, 6) is connected to a fastening plate (8) which is to be arranged above a hollow panel (22).

3. A connection fitting according to claim 2, **characterised in that** a firm base part (13) is provided on the opposite side of the housing (1) from the fastening plate (8).

4. A connection fitting according to claim 2 or 3, **characterised in that** the tensioning element (2) has a tool receiving feature (15), and an aperture (14) for insertion of a tool is provided in the fastening plate (8).

5. A connection fitting according to any one of the preceding claims, **characterised in that** the hinge is in the form of a film hinge (7).

6. A connection fitting according to any one of the preceding claims, **characterised in that** a locking device (11, 12) is arranged for connection of the two housing parts (5, 6) in the closed state of the housing (1).

7. A connection fitting according to claim 6, **characterised in that** the locking device consists of a resilient locking hook (11) arranged underneath the housing (1) on one of the two parts thereof and of a locking recess (12) provided on the other part.

8. A connection fitting according to any one of claims 2 to 7, **characterised in that** the fastening plate (8) projects beyond the housing (1) especially at the housing hinge (7), a downwardly oriented pin (10) being provided on the projecting portion (9).

9. A connection fitting according to any one of the preceding claims, **characterised in that** the housing (1) has partially encircling ribs (18) and has wings (19) which engage under the outer layer of the hollow panel (9).

10. A connection fitting according to any one of the preceding claims, **characterised in that** the housing (1) has a support web (20) in the lower portion on its side remote from the hinge (7).

## Revendications

1. Pièce d'assemblage pour panneaux creux, en particuliers panneaux en nid d'abeille, panneaux sandwich ou analogues, avec une partie de serrage (2) qui est montée à rotation dans un boîtier (1) et qui reçoit la tête (3) d'une goupille de serrage associée (4), sachant que le boîtier (1) est réalisé en deux parties, **caractérisée en ce que** les deux parties de boîtier (5, 6) sont reliées par une charnière (7) ayant un axe s'étendant environ parallèlement à l'axe de la partie de serrage, et peuvent être mutuellement assemblées par enclenchement dans la position fermée.

2. Pièce d'assemblage selon la revendication 1, **caractérisée en ce qu'**une des deux parties de boîtier (5, 6) est reliée à une plaque de fixation (8) à disposer au-dessus d'un panneau creux (22).

3. Pièce d'assemblage selon la revendication 2, **caractérisée en ce qu'**une partie de fond fixe (13) est configurée sur le côté du boîtier (1) opposé à la plaque de fixation (8).

4. Pièce d'assemblage selon la revendication 2 ou 3, **caractérisée en ce que** la partie de serrage (2) présente un logement d'outil (15), et une ouverture (14) pour introduire un outil est ménagée dans la plaque de fixation (8).

5. Pièce d'assemblage selon l'une des revendications précédentes, **caractérisée en ce que** la charnière est réalisée sous forme de charnière pelliculaire (7).

6. Pièce d'assemblage selon l'une des revendications précédentes, **caractérisée en ce qu'**un dispositif d'enclenchement (11, 12) est prévu pour l'assemblage des deux parties de boîtier (5, 6) dans l'état fermé du boîtier (1).

7. Pièce d'assemblage selon la revendication 6, **caractérisée en ce que** le dispositif d'enclenchement est constitué d'un crochet d'enclenchement élastique (11) disposé en dessous du boîtier (1) sur une des deux parties de ce dernier, et d'un renfoncement d'enclenchement (12) prévu sur l'autre partie.

8. Pièce d'assemblage selon l'une des revendications 2 à 7, **caractérisée en ce que** la plaque de fixation (8) dépasse au-dessus du boîtier (1) en particulier au niveau de la charnière de boîtier (7), sachant qu'un tenon (10) dirigé vers le bas est prévu sur la partie dépassante (9).

9. Pièce d'assemblage selon l'une des revendications précédentes, **caractérisée en ce que** le boîtier (1) présente des nervures partiellement entourantes (18) et des pattes (19) engageant par en dessous la couche supérieure du panneau creux (9).

10. Pièce d'assemblage selon l'une des revendications précédentes, **caractérisée en ce que** le boîtier (1) présente une nervure d'appui (20) sur son côté opposé à la charnière (7), dans la partie inférieure.
